# EUROPÄISCHE PATENTSCHRIFT

(11) **EP 2 250 408 B1**
(45) Veröffentlichungstag und Bekanntmachung des Hinweises auf die Patenterteilung: **02.11.2011**
(21) Anmeldenummer: 09720127.1
(22) Anmeldetag: 20.02.2009
(51) Int. Cl.: F16H 63/30, F16H 61/32

(54) **ANORDNUNG ZUM SCHALTEN VON ZUMINDEST ZWEI LOSRÄDERN**
ARRANGEMENT FOR SHIFTING AT LEAST TWO LOOSE WHEELS
ENSEMBLE PERMETTANT D'ACCOUPLER AU MOINS DEUX PIGNONS FOUS

(30) Priorität: 13.03.2008 DE 102008000646
(43) Veröffentlichungstag der Anmeldung: 17.11.2010
(73) Patentinhaber: ZF Friedrichshafen AG, 88038 Friedrichshafen (DE)
(72) Erfinder: REISCH, Matthias, 88214 Ravensburg (DE); RIEGER, Wolfgang, 88048 Friedrichshafen (DE)
(86) Internationale Anmeldenummer: PCT/EP2009/052008
(87) Internationale Veröffentlichungsnummer: WO 2009/112338

(56) Entgegenhaltungen:
- EP-A1- 0 446 087
- WO-A1-2006/046868
- DE-B4-102004 001 961
- DE-C- 866 290
- FR-A1- 2 831 627

## Beschreibung

Die vorliegende Erfindung betrifft eine Anordnung zum Schalten von zumindest zwei Losrädern unabhängig von einer zugeordneten Welle eines Getriebes gemäß der im Oberbegriff des Patentanspruches 1 näher definierten Art. Eine solche Anordnung ist aus der gattungsgemäßen DE 866 290 C1 bekannt.

Beispielsweise aus der Druckschrift DE 10 2004 001 961 B4 ist ein Lastschaltgetriebe in Vorgelegebauweise bekannt. Bei dem bekannten Lastschaltgetriebe sind schaltbare Losräder an den jeweiligen Vorgelegewellen angeordnet, um die Vorgelegewellen mit den Eingangswellen des Getriebes koppeln zu können. Zum Schalten eines so genannten Windungsganges, bei dem die beiden Teilgetriebe miteinander gekoppelt werden, ist bei dem bekannten Lastschaltgetriebe ein Schaltelement vorgesehen, dass eine drehfeste Verbindung zwischen zwei Losrädern einer Vorgelegewelle ermöglicht, ohne die Losräder selbst mit der Vorgelegewelle zu verbinden. Das bekannte Schaltelement wird über eine Außenbetätigung betätigt, welche radial außen bezogen auf die zu schaltenden Losrädern angeordnet ist. Somit wird der erforderliche radiale Bauraum für das bekannte Schaltelement deutlich erhöht.

Der vorliegenden Erfindung liegt somit die Aufgabe zu Grunde, eine Anordnung der eingangs beschriebenen Gattung vorzuschlagen, welche möglichst kompakt und bauraumsparend ausgeführt ist.

Diese Aufgabe wird erfindungsgemäß durch die Merkmale des Patentanspruches 1 gelöst. Weitere vorteilhafte Ausgestaltungen ergeben sich aus den Unteransprüchen und den Zeichnungen.

Demzufolge wird eine Anordnung zum Koppeln von zumindest zwei Losrädern unabhängig von einer zugeordneten Welle eines Getriebes mit zumindest einer Schaltvorrichtung vorgeschlagen, welche eine Betätigungseinrichtung und eine Schalteinrichtung umfasst, wobei die Schalteinrichtung mit der Betätigungseinrichtung axial bewegbar ist. Erfindungsgemäß kann die Betätigungseinrichtung zumindest teilweise in der Welle angeordnet sein. Auf diese Weise wird eine innen betätigte Anordnung zum schaltbaren Verbinden zweier Losrädern realisiert. Dies bedeutet, dass die Schalteinrichtung der erfindungsgemäßen Anordnung zur direkten Verbindung zweier benachbarter Losräder einer Welle von innen, das heißt, aus der Welle heraus betätigt wird. Somit kann ein mit der vorgeschlagenen Anordnung ausgerüstetes Getriebe kompakt und kostengünstig mit großer Gangzahl dargestellt werden und somit vorzugsweise für einen Front-Quer-Antrieb bei einem Fahrzeug verwendet werden.

Die erfindungsgemäß vorgeschlagene Anordnung umfasst eine formschlüssige Schalteinrichtung. Erfindungsgemäß wird als formschlüssige Schalteinrichtung eine Klauenschaltung verwendet.

Vorzugsweise kann die Betätigungseinrichtung der Anordnung als elektrisch angetriebener Spindeltrieb oder dergleichen ausgebildet sein. Es sind jedoch auch andere Antriebsarten, wie z.B. pneumatische, mechanische, hydraulische Antriebe, verwendbar. Bei der Verwendung eines Spindeltriebes kann in vorteilhafter Weise eine vorkonfektionierte Modulbauweise realisiert werden, wobei das Modul auf einfachste Weise in die zum Beispiel als Hohlwelle ausgebildete Welle eingeschoben werden kann. Je nach Anwendung kann der Spindeltrieb mit der Welle oder mit einem Gehäuseteil des Getriebes verbunden sein.

Im Rahmen einer möglichen Ausführungsvariante der Erfindung kann vorgesehen sein, dass der Spindeltrieb einen Elektromotor oder dergleichen umfasst, der eine Spindel koaxial zur Welle antreibt, die mit einer Spindelmutter zum axialen Bewegen derselben gekoppelt ist. Somit kann die Spindelmutter eine axiale Verschiebung der Schalteinrichtung bewirken, um die beiden Losräder im geschalteten Zustand miteinander unabhängig von der Welle zu verbinden. Es sind auch andere Wirkverbindungen zwischen der als Aktuator ausgebildeten Betätigungseinrichtung und der Schalteinrichtung möglich.

Bei der erfindungsgemäßen Anordnung ist als formschlüssige Schalteinrichtung eine mit der Betätigungseinrichtung gekoppelte Schiebemuffe vorgesehen, welche mit einem auf der Welle drehbar gelagerten Schaltklauenelement auf der Welle zwischen den schaltbaren Losrädern axial bewegbar angeordnet ist, wobei das Schaltklauenelement mit einem der Losräder ständig über eine Mitnahmeverzahnung gekoppelt ist.

Um die Verbindung zwischen der Schiebemuffe und der Betätigungseinrichtung zu realisieren, kann vorgesehen sein, das die Schiebemuffe über Mitnahmebolzen oder dergleichen zum axialen Bewegen mit der Spindelmutter des Spindeltriebes gekoppelt ist, wobei jeder Mitnahmebolzen durch eine radial verlaufene Bohrung der Welle geführt ist. Die Bohrung kann vorzugsweise als Langloch ausgeführt sein, um die axiale Beweglichkeit der Mitnahmebolzen mit der Schiebemuffe zu ermöglichen.

Die Verbindung zwischen der Spindelmutter und den Mitnahmebolzen kann beispielsweise durch eine radial außen vorgesehene Nut an der Spindelmutter realisiert werden, in welche die an der Schiebemuffe befestigten Mitnahmebolzen eingreifen können. Vorzugsweise können zwei gegenüberliegende Mitnahmebolzen an der Schiebemuffe befestigt sein. Es sind jedoch auch weitere z.B. über den Umfang verteilt angeordnete Mitnahmebolzen an der Schiebemuffe befestigbar.

Mit der erfindungsgemäß vorgeschlagene Anordnung kann die Schiebemuffe aus einer Neutrallage derart in eine erste Schaltlage zum Verbinden der beiden Losräder axial bewegt werden, dass die Mitnahmeverzahnung des Schaltklauenelements sowohl mit der Innenverzahnung des einen Losrades als auch mit der Innenverzahnung des weiteren Losrades gekoppelt ist. In dieser ersten Schaltlage werden somit die beiden Losräder drehfest verbunden und können mit einer von der Welle unabhängigen Drehzahl bewegt werden. Zudem ist es auch möglich, dass die Schiebemuffe aus der Neutrallage zum drehfesten Verbinden des einen Losrades mit der zugeordneten Welle derart in eine weitere Schaltlage axial bewegbar ist, dass die Außenverzahnung der Schiebemuffe mit der Innenverzahnung des zu schaltenden Losrades gekoppelt ist. Auf diese Weise ist mit der erfindungsgemäßen Anordnung auch eine Verbindung von einem der Losräder mit der zugeordneten Welle möglich.

Vorzugsweise kann die Schiebemuffe zum unabhängigen Aufnehmen des Schaltklauenelementes einen radial außen vorgesehenen Aufnahmebereich oder dergleichen aufweisen, der das z.B. ringförmige Schaltklauenelement drehbar unabhängig von der Schiebemuffe lagert. Um eine axiale Sicherung des Schaltklauenelements zu realisieren, kann an jeder Seite des Schaltklauenelements ein Axiallager oder dergleichen vorgesehen sein.

Unabhängig von der jeweiligen Ausführungsvariante kann zur Lagerung der zu schaltenden Zahnräder beziehungsweise Losräder vorgesehen sein, dass vorzugsweise Schrägkugellager oder dergleichen verwendet werden. Da die Losräder unter Last eine Relativdrehung zur Welle haben können, wird eine Lagerung benötigt, welche eine Axialkraft und auch ein Kippmoment unter einer Relativdrehzahl abstützen kann. Es sind jedoch auch andere geeignete Lagerungen verwendbar, welche die vorgenannten Bedingungen erfüllen können.

Die vorgeschlagene Anordnung kann bei jedem Getriebe eingesetzt werden. Vorzugsweise kann die Anordnung jedoch bei einem Doppelkupplungsgetriebe in Vorgelegebauweise zum Schalten von mehreren lastschaltbaren Gängen und zumindest einen Windungsgang verwendet werden, insbesondere um Losräder mit der jeweiligen Vorgelegewelle oder auch Losräder untereinander unabhängig von der Vorgelegewelle zum Realisieren eines Windungsganges, also zum Koppeln der beiden Teilgetriebe des Doppelkupplungsgetriebes, mit einer von innen betätigten Schalteinrichtung verbinden zu können. Ferner ist es beispielsweise möglich, dass mehrere Losräder mit der zugeordneten Vorgelegewelle auch gleichzeitig durch die erfindungsgemäß vorgeschlagene Anordnung verbunden werden.

Nachfolgend wird die vorliegende Erfindung anhand der Zeichnungen näher erläutert. Es zeigen:
Fig. 1 eine schematische, geschnittene Ansicht eines beispielhaft dargestellten Doppelkupplungsgetriebes mit einer erfindungsgemäßen Anordnung; und
Fig. 2 eine schematische, geschnittene Ansicht einer möglichen Ausführungsvariante der erfindungsgemäßen Anordnung;

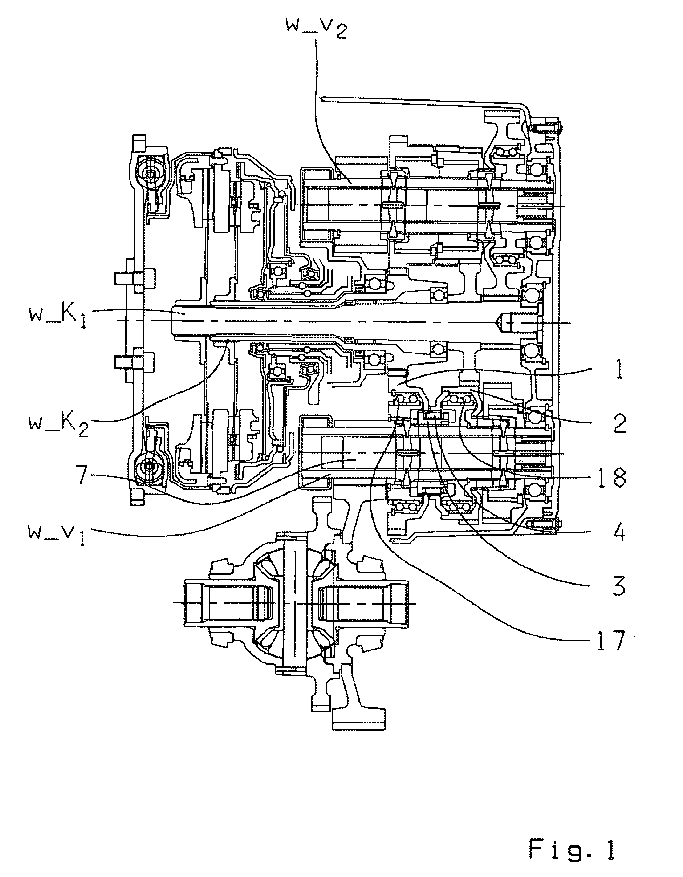

In Figur 1 ist beispielhaft als möglicher Anwendungsbereich für eine erfindungsgemäß vorgeschlagene Anordnung zum Schalten von zumindest einem Losrad an einer zugeordneten Welle eines Getriebes ein mehrgängiges Doppelkupplungsgetriebe im Schnitt dargestellt. Das Doppelkupplungsgetriebe umfasst zwei Kupplungen, deren Eingangsseiten mit einer Antriebswelle verbunden sind. Zudem ist an der Antriebswelle ein Torsionsschwingungsdämpfer angeordnet sein. Die Ausgangsseiten der Kupplungen sind mit jeweils einer von zwei koaxial zueinander angeordneten Getriebeeingangswellen w_K1, w_K2 verbunden. Die erste Getriebeeingangswelle w_K1 ist als Vollwelle und die zweite Getriebeeingangswelle w_K2 ist als Hohlwelle ausgebildet. Ferner sind zwei Vorgelegewellen w_v1, w_v2 vorgesehen, welche achsparallel zueinander angeordnet sind. An jeder Vorgelegewelle w_v1, w_v2 sind mehrere Losräder angeordnet, welche mit Festräder an den Getriebeeingangswellen w_K1, w_K2 in Eingriff stehen.

Um die Losräder der jeweiligen Vorgelegewelle w_v1, w_v2 schalten zu können, ist zumindest eine erfindungsgemäß vorgeschlagene Anordnung zum Schalten von der beiden Losrädern 1, 2 unabhängig von der jeweiligen Vorgelegewelle w_v1, w_v2 vorgesehen. Somit kann mit der erfindungsgemäßen Anordnung das Koppeln der beiden Getriebeeingangswellen w_k1 und w_k2 durch eine von innen betätigte Schalteinrichtung erfolgen, sodass die Getriebeeingangswellen w_k1 und w_k2 in Abhängigkeit gebracht werden und zumindest ein Windungsgang bei dem Doppelkupplungsgetriebe realisiert wird.

Die erfindungsgemäße Anordnung zum Schalten von zwei Losrädern 1, 2 unabhängig von der zugeordneten Vorgelegewelle w_v1 des Getriebes weist eine Schaltvorrichtung auf, welche eine innen liegende Betätigungseinrichtung und eine Schalteinrichtung umfasst, wobei die Schalteinrichtung mit der Betätigungseinrichtung axial bewegbar ist. Die erfindungsgemäß vorgeschlagene Anordnung kann auch an der anderen Vorgelegewelle w_2 zum Schalten weiterer Losräder vorgesehen sein, so dass die in Figur 1 gezeigte Anordnung nur beispielhaft ist.

Erfindungsgemäß können mit der von innen heraus betätigten Schaltvorrichtung der erfindungsgemäßen Anordnung zwei der gemeinsamen Vorgelegewelle w_v1 zugeordnete Losräder 1, 2 zum Realisieren eines Windungsganges miteinander gekoppelt werden.

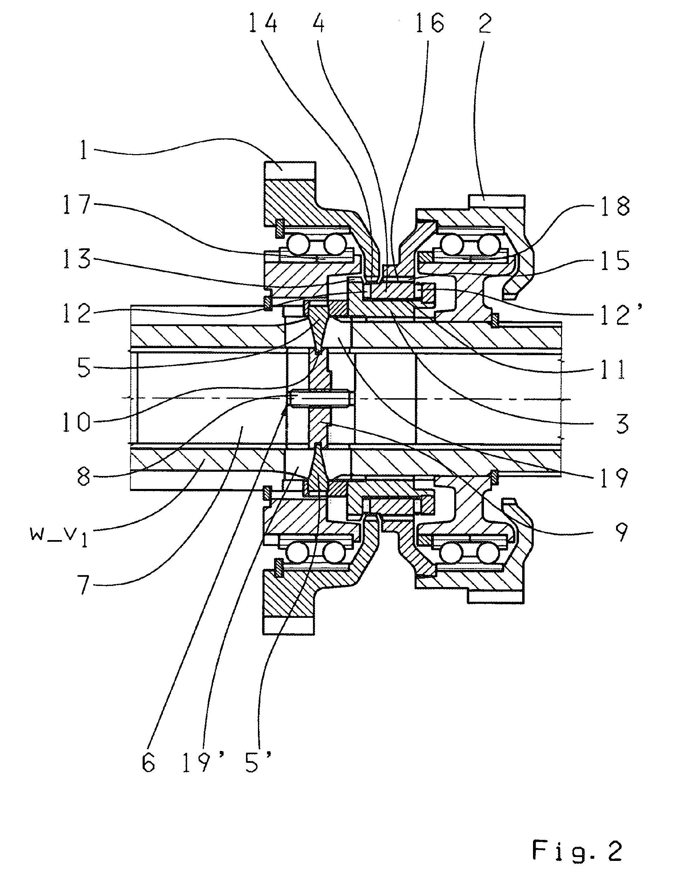

Gemäß Figur 2 sind als Schalteinrichtung eine mit der Betätigungseinrichtung gekoppelte Schiebemuffe 3 und ein Schaltklauenelement 4 vorgesehen. Die Schiebemuffe 3 ist axial bewegbar auf der Vorgelegewelle w_v1 angeordnet, und kann von der Betätigungseinrichtung axial bewegt werden. Dazu sind an der Schiebemuffe 3 radial verlaufende Mitnahmebolzen 5, 5' befestigt, die mit der Betätigungseinrichtung in Eingriff stehen, wobei in Figur 2 zwei gegenüberliegende Mitnahmebolzen 5, 5' vorgesehen sind. Es sind jedoch auch weitere über den Umfang verteilte Mitnahmebolzen verwendbar.

Die Betätigungseinrichtung ist bei der gezeigten Ausführungsvariante als Innenbetätigung mit einem radial innen liegenden, elektrisch angetriebenen Spindeltrieb 6 ausgebildet. Der Spindeltrieb 6 ist als Modul in der als Hohlwelle ausgebildeten Vorgelegewelle w_v1 angeordnet und mit dieser drehfest verbunden. Der Spindeltrieb 6 umfasst einen Elektromotor 7, der eine Spindel 8 antreibt, die mit einer Spindelmutter 9 zum axialen Bewegen gekoppelt ist. Die Spindelmutter 9 weist radial außen eine Nut 10 auf, in welche die an der Schiebemuffe 3 befestigten Mitnahmebolzen 5, 5' eingreifen. Die Mitnahmebolzen 5, 5' sind jeweils radial nach innen durch entsprechende Langlöcher 19, 19' der Vorgelegewelle w_v1 geführt. Auf diese Weise kann durch entsprechende Drehbewegungen der Spindel 8 die Schiebemuffe 3 axial in beide Richtungen verschoben werden.

Die Schiebemuffe 3 umfasst einen radial außen vorgesehenen Aufnahmebereich 11 zum drehbaren Aufnehmen des etwa ringförmigen Schaltklauenelements 4, so dass das Schaltklauenelement 4 unabhängig von der Schiebemuffe 3 drehbar ist. Da die Betätigungseinrichtung mit der daran gekoppelten Schiebemuffe 3 mit der zugeordneten Vorgelegewelle w_v1 mitdreht, ist das davon unabhängig drehbare Schaltklauenelement 4 mittels Axiallagern 12, 12' in axialer Richtung gesichert.

Das Schaltklauenelement 4 weist radial außen eine Mitnahmeverzahnung 15 auf, welche mit einer Innenverzahnung 16 des zweiten Losrades 2 ständig in Eingriff steht. Wenn die Schiebemuffe 3 aus der in Figur 2 dargestellten Neutrallage der Anordnung bezogen auf die Zeichnungsebene nach links durch die Betätigungseinrichtung verschoben wird, kann die Mitnahmeverzahnung 15 des Schaltklauenelements 4 sowohl mit der Innenverzahnung 14 des ersten Losrades 1 als auch mit der Innenverzahnung 16 des zweiten Losrades 2 in Eingriff gebracht werden. In dieser ersten Schaltlage werden die beiden Losräder 1, 2 unabhängig von der Vorgelegewelle w_v1 miteinander gekoppelt, um einen Windungsgang bei dem Getriebe zu realisieren.

Die Schiebemuffe 3 umfasst eine Außenverzahnung 13, die mit einer korrespondierenden Innenverzahnung 14 des ersten Losrades 1 koppelbar ist. Dazu muss die Schiebemuffe 3 aus der in Figur 2 dargestellten Neutrallage der Anordnung bezogen auf die Zeichnungsebene nach rechts durch die Betätigungseinrichtung verschoben werden. In dieser zweiten Schaltlage wird die Außenverzahnung 13 der Schiebemuffe 3 mit der Innenverzahnung 14 des ersten Losrades 1 in Eingriff gebracht. Auf diese Weise wird das erste Losrad 1 geschaltet, indem es drehfest mit der Vorgelegewelle w_v1 verbunden wird.

Unabhängig von der Ausführungsvariante kann zumindest eines der Losräder 1, 2 mit einem Schrägkugellager 17, 18 auf der Vorgelegewelle w_v1 drehbar gelagert werden. Ferner kann als Antrieb ein elektrischer, pneumatischer, mechanischer, hydraulischer oder dergleichen Antrieb für die Schalteinrichtung eingesetzt werden.

### Bezugszeichen

- 1: erstes Losrad
- 2: zweites Losrad
- 3, 3', 3": Schiebemuffe
- 4, 4': Schaltklauenelement
- 5,5': Mitnahmebolzen
- 6: Spindeltrieb
- 7: Elektromotor
- 8: Spindel
- 9: Spindelmutter
- 10: Nut
- 11: Ausnahmebereich
- 12, 12': Axiallager
- 13: Außenverzahnung der Schiebemuffe
- 14: Innenverzahnung des ersten Losrades
- 15: Mitnahmeverzahnung des Schaltklauenelements
- 16: Innenverzahnung des zweiten Losrades
- 17: Schrägkugellager
- 18: Schrägkugellager
- 19, 19': Langloch
- w_K1: erste Getriebeeingangswelle
- w_K2: zweite Getriebeeingangswelle
- w_v1: erste Vorgelegewelle
- w_v1: zweite Vorgelegewelle

## Patentansprüche

1. Anordnung zum Koppeln von zumindest zwei Losrädern (1, 2) unabhängig von einer zugeordneten Welle eines Getriebes, mit zumindest einer Schaltvorrichtung, welche eine Betätigungseinrichtung und eine formschlüssige Schalteinrichtung umfasst, wobei die Schalteinrichtung mit der Betätigungseinrichtung axial bewegbar ist und die Betätigungseinrichtung zumindest teilweise in der Welle angeordnet ist, **dadurch gekennzeichnet, dass** als formschlüssige Schalteinrichtung eine mit der Betätigungseinrichtung gekoppelte Schiebemuffe (3) vorgesehen ist, welche mit einem auf der Welle drehbar gelagerten Schaltklauenelement (4) auf der Welle zwischen den schaltbaren Losrädern (1, 2) axial bewegbar angeordnet ist, wobei das Schaltklauenelement (4) mit einem der Losräder (2) ständig über eine Mitnahmeverzahnung gekoppelt ist.

2. Anordnung nach Anspruch 1, **dadurch gekennzeichnet, dass** die Betätigungseinrichtung als elektrisch angetriebener Spindeltrieb (6) ausgebildet ist.

3. Anordnung nach Anspruch 2, **dadurch gekennzeichnet, dass** der Spindeltrieb (6) in der als Hohlwelle ausgebildeten Welle angeordnet ist.

4. Anordnung nach Anspruch 2 oder 3, **dadurch gekennzeichnet, dass** der Spindeltrieb (6) mit der Welle oder mit einem Gehäuse des Getriebes verbunden ist.

5. Anordnung nach einem der Ansprüche 2 bis 4, **dadurch gekennzeichnet, dass** der Spindeltrieb (6) einen Elektromotor (7) umfasst, der eine Spindel (8) koaxial zur Welle antreibt, die mit einer Spindelmutter (9) zum axialen Bewegen derselben gekoppelt ist.

6. Anordnung nach Anspruch 5, **dadurch gekennzeichnet, dass** die Schiebemuffe (3) über Mitnahmebolzen (5, 5') zum axialen Bewegen mit der Spindelmutter des Spindeltriebes gekoppelt ist, wobei jeder Mitnahmebolzen durch ein radial verlaufendes Langloch (19, 19') der Welle geführt ist.

7. Anordnung nach Anspruch 6, **dadurch gekennzeichnet, dass** die Spindelmutter (9) radial außen eine Nut (10) aufweist, in welche die an der Schiebemuffe (3) befestigten Mitnahmebolzen (5, 5') eingreifen.

8. Anordnung nach einem der vorangehenden Ansprüche, **dadurch gekennzeichnet, dass** die Schiebemuffe (3) aus einer Neutrallage derart in eine erste Schaltlage zum Verbinden der beiden Losräder axial bewegbar ist, dass die Mitnahmeverzahnung (15) des Schaltklauenelements (4) sowohl mit einer Innenverzahnung (14) des ersten Losrades (1) als auch mit einer Innenverzahnung (16) des zweiten Losrades (2) gekoppelt ist.

9. Anordnung nach Anspruch 8, **dadurch gekennzeichnet, dass** die Schiebemuffe (3) aus der Neutrallage zum drehfesten Verbinden des ersten Losrades (1) mit der zugeordneten Welle derart in eine weitere Schaltlage axial bewegbar ist, dass eine Außenverzahnung (13) der Schiebemuffe (3) mit der Innenverzahnung (14) des zu schaltenden Losrades (1) gekoppelt ist.

10. Anordnung nach einem der vorangehenden Ansprüche, **dadurch gekennzeichnet, dass** die Schiebemuffe (3) einen radial außen vorgesehenen Aufnahmebereich (11) zum drehbaren Aufnehmen des etwa ringförmigen Schaltklauenelements (4) aufweist.

11. Anordnung nach einem der vorangehenden Ansprüche, **dadurch gekennzeichnet, dass** das Schaltklauenelement (4) in axialer Richtung mittels Axiallagern (12, 12') gesichert ist.

12. Anordnung nach einem der vorangehenden Ansprüche, **dadurch gekennzeichnet, dass** die zu schaltenden Losräder (1, 2) mittels Schrägkugellager (17, 18) auf der Welle drehbar gelagert sind.

13. Anordnung nach einem der vorangehenden Ansprüche, **dadurch gekennzeichnet, dass** die Anordnung in einem Doppelkupplungsgetriebe zum Schalten zumindest eines Windungsganges verwendbar ist.

## Claims

1. Arrangement for coupling at least two idler gears (1, 2) independently of an associated shaft of a transmission, having at least one shifting apparatus which comprises an actuating device and a positively locking shifting device, the shifting device being movable axially by way of the actuating device, and the actuating device being arranged at least partly in the shaft, **characterized in that** a slider sleeve (3) which is coupled to the actuating device is provided as positively locking shifting device, which slider sleeve (3) is arranged such that it can be moved axially on the shaft between the shiftable idler gears (1, 2) by way of a shifting-dog element (4) which is mounted rotatably on the shaft, the shifting-dog element (4) being coupled permanently to one of the idler gears (2) via a driving toothing formation.

2. Arrangement according to Claim 1, **characterized in that** the actuating device is configured as an electrically driven spindle drive (6).

3. Arrangement according to Claim 2, **characterized in that** the spindle drive (6) is arranged in the shaft which is configured as a hollow shaft.

4. Arrangement according to Claim 2 or 3, **characterized in that** the spindle drive (6) is connected to the shaft or to a housing of the transmission.

5. Arrangement according to one of Claims 2 to 4, **characterized in that** the spindle drive (6) comprises an electric motor (7) which drives a spindle (8) coaxially with respect to the shaft, which spindle (8) is coupled to a spindle nut (9) for the axial movement of the latter.

6. Arrangement according to Claim 5, **characterized in that** the slider sleeve (3) is coupled to the spindle nut of the spindle drive via driving pins (5, 5') for the axial movement, each driving pin being guided by a radially extending slot (19, 19') of the shaft.

7. Arrangement according to Claim 6, **characterized in that** the spindle nut (9) has a groove (10) radially on the outside, into which groove (10) the driving pins (5, 5') which are fastened to the slider sleeve (3) engage.

8. Arrangement according to one of the preceding claims, **characterized in that** the slider sleeve (3) can be moved axially out of a neutral position into a first shifting position for connecting the two idler gears, in such a way that the driving toothing formation (15) of the shifting-dog element (4) is coupled both to an internal toothing formation (14) of the first idler gear (1) and to an internal toothing formation (16) of the second idler gear (2).

9. Arrangement according to Claim 8, **characterized in that** the slider sleeve (3) can be moved axially out of the neutral position into a further shifting position for connecting the first idler gear (1) fixedly to the associated shaft so as to rotate with it, in such a way that an external toothing formation (13) of the slider sleeve (3) is coupled to the internal toothing formation (14) of the idler gear (1) to be shifted.

10. Arrangement according to one of the preceding claims, **characterized in that** the slider sleeve (3) has a receiving region (11) which is provided radially on the outside for receiving the approximately annular shifting-dog element (4) rotatably.

11. Arrangement according to one of the preceding claims, **characterized in that** the shifting-dog element (4) is secured in the axial direction by means of axial bearings (12, 12').

12. Arrangement according to one of the preceding claims, **characterized in that** the idler gears (1, 2) to be shifted are mounted rotatably on the shaft by means of angular-contact ball bearings (17, 18).

13. Arrangement according to one of the preceding claims, **characterized in that** the arrangement can be used in a dual clutch transmission for shifting at least one winding gear.

## Revendications

1. Ensemble pour accoupler au moins deux pignons fous (1, 2) indépendamment d'un arbre associé d'une transmission, comprenant au moins un agencement de commutation qui comprend un dispositif d'actionnement et un dispositif de commutation par engagement par correspondance géométrique, le dispositif de commutation étant déplaçable axialement avec le dispositif d'actionnement et le dispositif d'actionnement étant disposé au moins en partie dans l'arbre, **caractérisé en ce que** l'on prévoit comme dispositif de commutation par engagement par correspondance géométrique un manchon coulissant (3) accouplé au dispositif d'actionnement qui, avec un élément de griffe de commutation (4) monté à rotation sur l'arbre, est disposé de manière déplaçable axialement sur l'arbre entre les pignons fous commutables (1, 2), l'élément de griffe de commutation (4) étant accouplé à l'un des pignons fous (2) de manière constante par le biais d'une denture d'entraînement.

2. Ensemble selon la revendication 1, **caractérisé en ce que** le dispositif d'actionnement est réalisé sous forme d'entraînement à broche (6) à commande électrique.

3. Ensemble selon la revendication 2, **caractérisé en ce que** l'entraînement à broche (6) est disposé dans l'arbre réalisé sous forme d'arbre creux.

4. Ensemble selon la revendication 2 ou 3, **caractérisé en ce que** l'entraînement à broche (6) est connecté à l'arbre ou à un boîtier de la transmission.

5. Ensemble selon l'une quelconque des revendications 2 à 4, **caractérisé en ce que** l'entraînement à broche (6) comprend un moteur électrique (7) qui entraîne une broche (8) coaxialement à l'arbre, laquelle est accouplée à un écrou de broche (9) en vue du déplacement axial de celui-ci.

6. Ensemble selon la revendication 5, **caractérisé en ce que** le manchon coulissant (3) est accouplé par le biais de boulons d'entraînement (5, 5') en vue du déplacement axial à l'écrou de broche de l'entraînement à broche, chaque boulon d'entraînement étant guidé par un trou oblong s'étendant radialement (19, 19') de l'arbre.

7. Ensemble selon la revendication 6, **caractérisé en ce que** l'écrou de broche (9) présente radialement à l'extérieur une rainure (10) dans laquelle s'engagent les boulons d'entraînement (5, 5') fixés sur le manchon coulissant (3).

8. Ensemble selon l'une quelconque des revendications précédentes, **caractérisé en ce que** le manchon coulissant (3) peut être déplacé axialement depuis une position neutre dans une première position de commutation pour connecter les deux pignons fous, de telle sorte que la denture d'entraînement (15) de l'élément de griffe de commutation (4) soit accouplée à la fois à une denture interne (14) du premier pignon fou (1) et à une denture interne (16) du deuxième pignon fou (2).

9. Ensemble selon la revendication 8, **caractérisé en ce que** le manchon coulissant (3) peut être déplacé axialement depuis la position neutre en vue de la connexion solidaire en rotation du premier pignon fou (1) à l'arbre associé dans une autre position de commutation de telle sorte qu'une denture externe (13) du manchon coulissant (3) soit accouplée à la denture interne (14) du pignon fou à commuter (1).

10. Ensemble selon l'une quelconque des revendications précédentes, **caractérisé en ce que** le manchon coulissant (3) présente une région de réception (11) prévue radialement à l'extérieur pour recevoir de manière rotative l'élément de griffe de commutation (4) de forme approximativement annulaire.

11. Ensemble selon l'une quelconque des revendications précédentes, **caractérisé en ce que** l'élément de griffe de commutation (4) est fixé dans la direction axiale au moyen de paliers axiaux (12, 12').

12. Ensemble selon l'une quelconque des revendications précédentes, **caractérisé en ce que** les pignons fous (1, 2) à commuter sont montés de manière rotative sur l'arbre au moyen de roulements à billes à contacts obliques (17, 18).

13. Ensemble selon l'une quelconque des revendications précédentes, **caractérisé en ce que** l'ensemble peut être utilisé dans une boîte de vitesses à double embrayage pour commuter au moins un engrenage à enroulement.
